(19) Europäisches Patentamt / European Patent Office / Office européen des brevets

(11) **EP 4 284 690 B1**

(12) **FASCICULE DE BREVET EUROPEEN**

(45) Date de publication et mention
de la délivrance du brevet:
**05.03.2025 Bulletin 2025/10**

(21) Numéro de dépôt: **22700841.4**

(22) Date de dépôt: **20.01.2022**

(51) Classification Internationale des Brevets (IPC):
**B60W 30/09** *(2012.01)* **B60W 50/00** *(2006.01)*

(52) Classification Coopérative des Brevets (CPC):
**B60W 30/09;** B60W 2050/0008; B60W 2050/0012;
B60W 2510/20; B60W 2520/125; B60W 2520/14;
B60W 2520/18; B60W 2520/20; B60W 2552/30

(86) Numéro de dépôt international:
**PCT/EP2022/051219**

(87) Numéro de publication internationale:
**WO 2022/161845 (04.08.2022 Gazette 2022/31)**

(54) **PROCÉDÉ D'ÉVITEMENT D'OBSTACLE**

VERFAHREN ZUR VERMEIDUNG VON HINDERNISSEN

OBSTACLE AVOIDANCE METHOD

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **27.01.2021 FR 2100740**

(43) Date de publication de la demande:
**06.12.2023 Bulletin 2023/49**

(73) Titulaires:
• **Ampere SAS**
**92100 Boulogne-Billancourt (FR)**
• **Nissan Motor Co., Ltd.**
**Yokohama-shi, Kanagawa 221-0023 (JP)**

(72) Inventeur: **DO, Anh-Lam**
**92160 Antony (FR)**

(74) Mandataire: **Renault Group**
**Renault s.a.s.**
**1 avenue du Golf**
**FR TCR AVA 055**
**78084 Guyancourt Cedex (FR)**

(56) Documents cités:
**CN-A- 111 959 500 DE-A1- 102009 043 070
FR-A1- 3 088 275**

• **SIMON MUSTAKI: "Outils de pré-calibration
numérique des lois de commande de systèmes
de systèmes : Application aux aides à la
conduite et au véhicule autonome", 8 July 2019
(2019-07-08), XP055714240, Retrieved from the
Internet <URL:https://tel.archives-ouvertes.fr/
tel-02297892/document> [retrieved on 20200713]**

EP 4 284 690 B1

**Description**

DOMAINE TECHNIQUE DE L'INVENTION

La présente invention concerne de manière générale l'automatisation du suivi de trajectoires de véhicules automobiles.

Elle trouve une application particulièrement avantageuse dans le cadre des aides à la conduite de véhicules automobiles.

Elle concerne plus particulièrement un procédé de pilotage automatisé d'un véhicule automobile permettant à ce véhicule de suivre une trajectoire d'évitement d'obstacle, notamment dans un virage.

Elle concerne aussi un véhicule automobile équipé d'un calculateur adapté à mettre en œuvre ce procédé.

ETAT DE LA TECHNIQUE

Dans un souci de sécurisation des véhicules automobiles, on équipe actuellement ces derniers de systèmes d'aide à la conduite ou de systèmes de conduite autonome.

Parmi ces systèmes, on connait notamment les systèmes de freinage d'urgence automatique (plus connu sous l'abréviation AEB, de l'anglais « Automatic Emergency Braking »), conçus pour éviter toute collision avec des obstacles situés dans la voie empruntée par le véhicule. Ces systèmes sont conçus pour détecter un obstacle sur la voie et pour agir, dans cette situation, sur le système de freinage conventionnel du véhicule automobile.

Il existe toutefois des situations dans lesquelles ces systèmes de freinage d'urgence ne permettent pas d'éviter la collision ou ne sont pas utilisables (par exemple si un autre véhicule suit de trop près le véhicule automobile).

Pour ces situations, il a été développé des systèmes d'évitement automatique (plus connu sous l'abréviation AES, de l'anglais « Automatic Evasive Steering » ou « Automatic Emergency Steering ») qui permettent d'éviter l'obstacle en déviant le véhicule de sa trajectoire, en agissant sur la direction du véhicule.

Il arrive toutefois que ce système AES, après avoir calculé une trajectoire à suivre pour éviter l'obstacle, ne permette pas de guider le véhicule avec la précision souhaitée, ce qui peut s'avérer très dangereux.

Le document US9731755 propose alors de tenir compte dans les calculs de certains effets de la route que sont sa courbure, son dévers et sa pente longitudinale, de façon à ce que le suivi de trajectoire soit meilleure.

Plus précisément, ce document propose de calculer une consigne de pilotage qui minimise l'écart entre la trajectoire de véhicule et la trajectoire souhaitée. La commande utilisée à cet effet comporte une partie en boucle fermée de rétroaction et une partie en boucle ouverte, laquelle tient compte d'un facteur de perturbation de la route déterminé de façon prédictive.

Mais même en utilisant cette solution technique, le suivi de trajectoire n'est pas aussi précis que souhaité. Les documents DE 102009043070 A1 et FR 3088275 A1 présentent des systèmes d'aide à la conduite comparables.

PRÉSENTATION DE L'INVENTION

Afin de remédier à l'inconvénient précité de l'état de la technique, la présente invention propose de résoudre le problème de suivi de trajectoire d'évitement en tenant compte du roulis et/ou de l'accélération latérale subi par le véhicule, lesquels ont un impact important sur la trajectoire empruntée par le véhicule.

Plus particulièrement, on propose selon l'invention un procédé de pilotage automatisé d'un véhicule automobile, comportant des étapes de :

- acquisition de paramètres relatifs à une trajectoire d'évitement d'un obstacle par le véhicule automobile,
- acquisition d'une accélération latérale ou d'un angle de roulis subi par le véhicule automobile,
- calcul par un calculateur d'une consigne provisoire de pilotage d'un actionneur de braquage des roues directrices, en fonction desdits paramètres et au moyen d'un contrôleur en boucle fermée, et
- calcul en boucle ouverte d'un terme de correction de ladite consigne provisoire de pilotage, en fonction de l'accélération latérale ou de l'angle de roulis acquis.

Ainsi, le contrôleur en boucle fermée comporte un retour d'état statique calculé depuis les variables d'état du véhicule et de la route à un instant t, sans avoir à réaliser aucune prédiction qui serait source d'erreur.

Le terme de correction en boucle ouverte est ensuite calculé en fonction du roulis du véhicule ou de l'accélération latérale, pour prendre en compte l'effet du roulis sur la trajectoire. Ce roulis ou cette accélération latérale peut être mesuré ou calculé.

Le terme de correction peut également être calculé en fonction de la courbure de route et des gains du contrôleur en boucle fermée.

Ainsi, d'autres caractéristiques avantageuses et non limitatives du procédé conforme à l'invention, prises individuellement ou selon toutes les combinaisons techniquement possibles, sont les suivantes :

- le terme de correction est calculé en fonction d'un coefficient de braquage induit par le roulis du véhicule automobile sur les roues avant du véhicule automobile et/ou d'un coefficient de braquage induit par le roulis du véhicule automobile sur les roues arrière du véhicule automobile ;
- le terme de correction est calculé en fonction de la courbure de la route empruntée par le véhicule automobile ;
- le terme de correction est égal à la somme du produit d'une première variable multipliée par l'accélération latérale ou par l'angle de roulis, et du produit d'une seconde variable multipliée par la courbure de la route ;
- le terme de correction est calculé en fonction d'au moins l'un des gains du contrôleur en boucle fermée :
- le terme de correction est calculé en fonction d'un gradient de sous-virage ;
- le gradient de sous-virage est calculé en fonction d'au moins l'un des gains du contrôleur en boucle fermée ;
- le gradient de sous-virage est calculé au moyen de l'équation suivante :

$$K_V = \left( \frac{l_r\left(1-k_\delta-k_{\delta_{ref}}\right)}{C_f} - \frac{l_f\left(1-k_\delta-k_{\delta_{ref}}+k_{\psi_L}-k_\beta\right)}{C_r} \right) \cdot \frac{m}{l_f+l_r}$$

où m, $C_f$, $C_r$, $l_f$, $l_r$ sont des paramètres liés uniquement à l'architecture du véhicule automobile, et où $k_\delta$, $k_{\delta ref}$, $K_{\Psi L}$ et $k_\beta$ sont des gains du contrôleur en boucle fermée ;

- le terme de correction est calculé au moyen de l'équation suivante :

$$\delta_{Ffwd} = \left[ \left(l_f + l_r\right)\left(1 - k_\delta - k_{\delta_{ref}}\right) + \left(k_{\psi_L} - k_\beta\right)l_r + k_{\psi_L} l_s - k_r V + K_V V^2 \right] . \rho_{ref} -$$
$$\left[ \left(1 - k_\delta - k_{\delta_{ref}}\right)\varepsilon_1 - \left(1 - k_\delta - k_{\delta_{ref}} + k_{\psi_L} - K_\beta\right)\varepsilon_2 \right] . \phi$$

où :

$l_f$, $l_r$ sont des paramètres liés uniquement à l'architecture du véhicule automobile,
V est la vitesse longitudinale du véhicule automobile,
$l_s$ est une distance de visée prédéterminée,
$\rho_{ref}$ est le rayon de courbure de la route au niveau du véhicule automobile,
$\varepsilon_1$ est le coefficient de braquage induit par le roulis sur le train de roues avant,
$\varepsilon_2$ est le coefficient de braquage induit par le roulis sur le train de roues arrière,
$\Phi$ est l'angle de roulis,
Kv est le gradient de sous-virage,
$k_\delta$, $k_{\delta ref}$, $k_{\Psi L}$, $k_r$, et $k_\beta$ sont des gains du contrôleur en boucle fermée.

L'invention propose également un véhicule automobile comprenant un actionneur de braquage des roues directrices et un calculateur pour piloter ledit actionneurs, programmé pour mettre en oeuvre un procédé tel que précité.
Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

DESCRIPTION DÉTAILLÉE DE L'INVENTION

La description qui va suivre en regard des dessins annexés, donnés à titre d'exemples non limitatifs, fera bien comprendre en quoi consiste l'invention et comment elle peut être réalisée.
Sur les dessins annexés :

[Fig. 1] est une vue schématique de dessus d'un véhicule automobile circulant sur une route, sur laquelle la trajectoire que ce véhicule doit emprunter est représentée ;
[Fig. 2] est une vue schématique de dessus du véhicule automobile de la figure 1, représenté dans quatre positions successives situées le long d'une trajectoire d'évitement d'un obstacle ;
[Fig. 3] est une vue schématique de dessus du véhicule automobile de la figure 1, permettant d'observer l'influence du roulis sur la trajectoire du véhicule ;

[Fig. 4] est un graphique illustrant les paramètres permettant de stabiliser une fonction de transfert en boucle fermée utilisée dans le cadre d'un procédé conforme à l'invention ;

[Fig. 5] est un schéma bloc qui illustre les différents algorithmes permettant de mettre en œuvre le procédé conforme à l'invention ;

[Fig. 6] est un schéma illustrant une fonction de transfert utilisée pour mettre en œuvre un procédé conforme à l'invention.

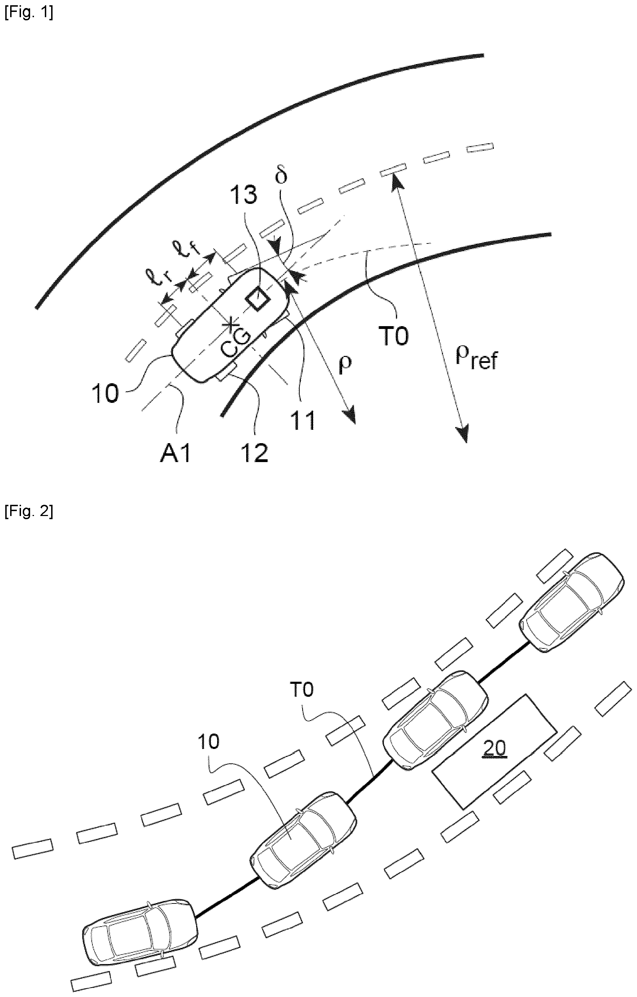

Sur la figure 1, on a représenté un véhicule automobile 10 comprenant classiquement un châssis qui délimite un habitacle, deux roues avant 11 directrices, et deux roues arrière 12 non directrices. En variante, ces deux roues arrière pourraient également être directrices, ce qui nécessiterait toutefois une adaptation de la loi de commande décrite ci-après.

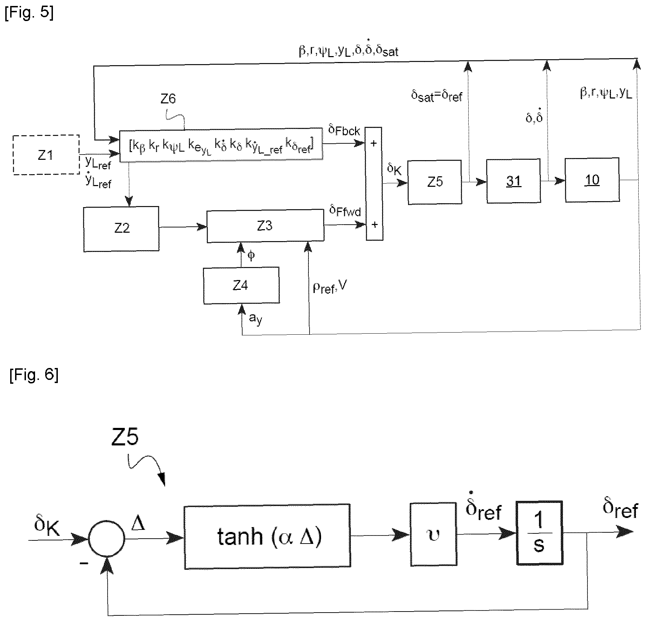

Ce véhicule automobile 10 comporte au moins un système de direction conventionnel permettant d'agir sur l'orientation des roues avant 11 de façon à pouvoir faire tourner le véhicule. Ce système de direction conventionnel comprend notamment un volant connecté à des biellettes afin de faire pivoter les roues avant 11. Dans l'exemple considéré, il comporte également un actionneur 31 (représenté sur la figure 5) permettant d'agir sur l'orientation des roues avant en fonction de l'orientation du volant et/ou en fonction d'une requête reçue d'un calculateur 13.

En complément, ce véhicule automobile pourrait également comporter un système de freinage différentiel permettant d'agir différemment sur les deux roues avant 11 (voire aussi sur les deux roues arrière 12) de façon à ralentir le véhicule automobile en le faisant tourner. Un tel système de freinage différentiel comprend par exemple un différentiel piloté ou des moteurs électriques placés au niveau des roues du véhicule ou encore des étriers de freinage pilotés indépendamment les uns des autres. Il comporte ainsi au moins un actionneur qui est conçu pour agir différemment sur les vitesses de rotation des roues en fonction d'une requête reçue du calculateur 13.

On considérera ici, pour la clarté de l'exposé, que le véhicule est dépourvu d'un tel système de freinage différentiel. S'il en était pourvu, cela nécessiterait une adaptation de la loi de commande décrite ci-après.

Le calculateur 13 est prévu pour piloter l'actionneur 31 de direction assistée en fonction des conditions de circulation rencontrées. Il comporte à cet effet au moins un processeur, au moins une mémoire et une interface d'entrée et de sortie connectée à un réseau de données du véhicule (typiquement un réseau CAN).

Grâce à son interface, le calculateur 13 est adapté à recevoir des signaux d'entrée provenant de différents capteurs.

Parmi ces capteurs, il est par exemple prévu :

- un dispositif tel qu'une caméra frontale, permettant de repérer la position du véhicule par rapport à sa voie de circulation,
- un dispositif tel qu'un télédétecteur RADAR ou LIDAR, permettant de détecter un obstacle 20 se trouvant sur la trajectoire du véhicule automobile 10 (figure 2),
- au moins un dispositif de détection latéral, tel qu'un télédétecteur RADAR ou LIDAR, permettant d'observer l'environnement sur les côtés du véhicule,
- un dispositif tel qu'un gyromètre, permettant de déterminer la vitesse de rotation en lacet (autour d'un axe vertical) du véhicule automobile 10,
- un capteur de position et de vitesse angulaire du volant, et
- un capteur de couple appliqué par le conducteur sur le volant.

Grâce à son interface, le calculateur 13 est adapté à transmettre une consigne à l'actionneur 31 de direction assistée.

Il permet ainsi de forcer le véhicule à suivre une trajectoire d'évitement T0 de l'obstacle 20 (voir figure 2).

Grâce à sa mémoire, le calculateur 13 mémorise des données utilisées dans le cadre du procédé décrit ci-dessous.

Il mémorise notamment une application informatique, constituée de programmes d'ordinateur comprenant des instructions dont l'exécution par le processeur permet la mise en œuvre par le calculateur du procédé décrit ci-après.

Avant de décrire ce procédé, on peut introduire les différentes variables et données qui seront utilisées, dont certaines sont illustrées sur la figure 1.

On considéra tout d'abord un repère (CG, X, Y, Z) attaché au véhicule, dont l'origine est située au centre de gravité du véhicule, dont l'axe X se confond avec l'axe longitudinal A1 du véhicule (en allant de l'arrière vers l'avant), dont l'axe Y est un axe latéral (allant ici de droite à gauche), et dont l'axe Z est un axe vertical lorsque le véhicule se trouve sur une route horizontale.

La masse totale du véhicule automobile sera notée « m » et sera exprimée en kg.

L'inertie du véhicule automobile autour de l'axe Z sera notée « J » ou « $I_z$ » et sera exprimée en N.m.

L'inertie du véhicule automobile autour de l'axe X sera notée $I_x$ et sera exprimée en N.m.

La distance entre le centre de gravité CG et l'essieu avant du véhicule sera notée « $l_f$ » et sera exprimée en mètres.

La distance entre le centre de gravité CG et l'essieu arrière sera notée « $l_r$ » et sera exprimée en mètres.

Le coefficient de rigidité de dérive des roues avant sera noté « $C_r$ » et sera exprimé en N/rad.

Le coefficient de rigidité de dérive des roues arrière sera noté « $C_r$ » et sera exprimé en N/rad.

Ces coefficients de rigidité de dérive des roues sont des notions bien connues de l'homme du métier. A titre d'exemple, le coefficient de rigidité de dérive des roues avant est ainsi celui qui permet d'écrire l'équation $F_r = 2.C_f.\alpha_f$, avec $F_f$ la force latérale de glissement des roues avant et $\alpha_f$ l'angle de dérive des roues avant.

L'angle de braquage que font les roues avant directrices avec l'axe longitudinal A1 du véhicule automobile 10 sera noté « $\delta$ » et sera exprimé en rad.

La variable $\delta_{ref}$, exprimée en rad, désignera la consigne saturée d'angle de braquage, telle qu'elle sera transmise à l'actionneur de direction assistée.

La variable $\delta_K$, exprimée en rad, désignera la consigne non saturée d'angle de braquage. A ce stade, on pourra seulement préciser que le concept de saturation sera lié à des limites de valeur ou de variation de valeur.

La vitesse de lacet du véhicule (autour de l'axe vertical passant par son centre de gravité CG) sera notée « r » et sera exprimée en rad/s.

L'angle relatif de cap entre l'axe longitudinal A1 du véhicule et la tangente à la trajectoire d'évitement T0 (trajectoire souhaitée du véhicule) sera noté « $\Psi_L$ » et sera exprimé en rad.

L'écart latéral entre l'axe longitudinal A1 du véhicule automobile 10 (passant par le centre de gravité CG) et la trajectoire d'évitement T0, à une distance de visée « Is » située à l'avant du véhicule, sera noté « $y_L$ » et sera exprimé en mètres.

La consigne d'écart latéral entre l'axe longitudinal A1 du véhicule automobile 10 (passant par le centre de gravité CG) et la trajectoire d'évitement T0, à une distance de visée « Is » située à l'avant du véhicule, sera notée « $y_{L-ref}$ » et sera exprimée en mètres.

L'erreur de suivi de trajectoire sera notée « $e_{yL}$ » et sera exprimée en mètres. Elle sera égale à la différence entre la consigne d'écart latéral $y_{L-ref}$ et l'écart latéral $y_L$.

La distance de visée « Is » précitée sera mesurée à partir du centre de gravité CG et s'exprimera en mètres.

L'angle de dérive du véhicule automobile 10 (angle que fait le vecteur vitesse du véhicule automobile avec son axe longitudinal A1) sera noté « $\beta$ » et sera exprimé en rad.

La vitesse du véhicule automobile selon l'axe longitudinal A1 sera notée « V » et s'exprimera en m/s.

La constante « g » sera l'accélération de la pesanteur, exprimée en m.s$^{-2}$.

L'angle de roulis pris par le véhicule par rapport à la verticale, exprimé en radians, sera noté $\Phi$.

Dans le cadre du calcul de cet angle de roulis, on pourra considérer les paramètres suivants :

- $b_r$ est le coefficient d'amortissement de roulis, exprimé en N.rad$^{-1}$.s$^{-1}$,
- $k_r$ est la raideur de roulis, exprimé en N.rad$^{-1}$,
- h est la distance entre le centre de roulis du véhicule et le sol.

L'accélération latérale subie par le véhicule selon l'axe Y sera notée $a_y$ et sera exprimée en m.s$^{-2}$ .

La courbure moyenne de la route au niveau du véhicule automobile sera notée $\rho_{ref}$ et s'exprimera en m$^{-1}$. Cette courbure est égale à l'inverse du rayon de courbure d'un l'arc-de-cercle qui est formé par la route au niveau précis du centre de gravité du véhicule automobile.

Les constantes « $\xi$ » et « $\omega$ » représenteront des caractéristiques dynamiques de l'angle de braquage des roues avant du véhicule, plus précisément $\xi$ représente l'amortissement et $\omega$ est la fréquence naturelle de la direction assistée électrique (DAE).

La constante « $\omega_f$ » représentera quant à elle une caractéristique dynamique d'une perturbation arbitraire « w » bornée appliquée au véhicule.

La vitesse de braquage désignera la vitesse angulaire de braquage des roues avant directrices.

A titre d'hypothèse, pour la clarté de l'exposé, la route sur laquelle évolue le véhicule automobile est supposée plate et horizontale.

Avant de décrire le procédé qui sera exécuté par le calculateur 13 pour mettre en oeuvre l'invention, on pourra décrire les calculs qui ont permis d'établir les algorithmes permettant de mettre en oeuvre l'invention, de façon à bien comprendre d'où proviennent ces algorithmes et sur quels ressorts ils s'appuient.

A titre liminaire, on notera ici que, pour simplifier l'exposé, seule la direction assistée sera utilisée pour faire dévier le véhicule de sa trajectoire initiale. Le freinage différentiel ne sera pas installé ou activé.

Sur la figure 5, on a modélisé le processus de calcul de la consigne saturée d'angle de braquage $\delta_{ref}$ à transmettre à l'actionneur 31 de direction assistée.

En résumé, il est prévu que le contrôleur détermine une trajectoire à suivre, détermine une première consigne d'angle de braquage (ci-après appelée consigne non saturée d'angle de braquage $\delta_K$) compte tenu de cette trajectoire et de paramètres liés à la dynamique du véhicule, puis sature cette consigne afin d'obtenir la consigne saturée d'angle de braquage $\delta_{ref}$ à transmettre à l'actionneur 31.

Sur la figure 5, le bloc Z1 correspond au bloc qui permet de déterminer la trajectoire à suivre pour éviter l'obstacle 20.

L'obstacle 20 peut être dans la même voie que celle du véhicule automobile 10 ou dans la voie adjacente, pour autant qu'il se trouve sur la trajectoire initiale du véhicule à une distance faible compte tenu de la vitesse du véhicule.

La façon de déterminer cette trajectoire d'évitement T0 ne faisant pas l'objet de la présente invention, elle ne sera pas ici décrite. On retiendra seulement que ce bloc Z1 permet de déterminer, lorsque la fonction AES est activée, une consigne d'écart latéral $y_{L-ref}$ et sa dérivée temporelle. On notera que cette trajectoire d'évitement T0 sera ici considérée comme statique mais qu'en variante, une trajectoire dynamique (recalculée en fonction de nouveaux obstacles détectés ou en fonction de la trajectoire effective du véhicule) pourrait être employée.

Le bloc Z6 illustre le contrôleur $K_{Fbck}$ qui serait utilisable et fiable si le véhicule automobile 10 roulait en ligne droite. Ce contrôleur correspond à un opérateur mathématique permettant de calculer une consigne provisoire d'angle de braquage (ci-après appelée première composante $\delta_{Fbck}$ de la consigne non saturée d'angle de braquage $\delta_K$) permettant de piloter les roues du véhicule de manière que ce dernier suive la trajectoire d'évitement T0.

Les blocs Z2, Z3 et Z4 illustrent des algorithmes qui permettent de calculer un terme de correction à appliquer à la première composante $\delta_{Fbck}$ pour prendre en compte l'impact du roulis du véhicule sur sa trajectoire. Ce terme de correction sera ci-après appelé seconde composante $\delta_{Ffwd}$ de la consigne non saturée d'angle de braquage $\delta_K$.

La somme de la première composante $\delta_{Fbck}$ et de la seconde composante $\delta_{Ffwd}$ permet de calculer la consigne non saturée d'angle de braquage $\delta_K$.

Le bloc Z5 illustre une contrainte que l'on souhaite appliquer à la consigne non saturée d'angle de braquage $\delta_K$.

Cette contrainte est ici une limitation de la vitesse de braquage du volant. On souhaite en effet ici que la vitesse angulaire de braquage du volant ne dépasse pas un seuil noté $v$, afin de rendre le véhicule contrôlable si le conducteur devait reprendre la main sur la conduite du véhicule pendant la phase d'évitement de l'obstacle.

D'autres contraintes seraient envisageables. A titre d'exemple, une contrainte de saturation en amplitude de l'angle de braquage pourrait être utilisée. Mais ici, pour la clarté de l'exposé, cette seconde contrainte ne sera pas envisagée. Encore en variante, on pourrait également ne prévoir aucune contrainte.

Le bloc Z5 permet donc ici de fournir une consigne saturée d'angle de braquage, ci-après référencée $\delta_{sat}$. Cette consigne saturée servant de référence pour piloter l'actionneur de direction assistée 31, elle sera aussi référencée $\delta_{ref}$.

On peut maintenant détailler les calculs ayant permis d'aboutir à l'invention.

Le braquage des roues avant 11 du véhicule peut être modélisé simplement par la formule mathématique suivante.

[Math.1]

$$\begin{pmatrix} \ddot{\delta} \\ \dot{\delta} \end{pmatrix} = \begin{bmatrix} -2\xi\omega & -\omega^2 \\ 1 & 0 \end{bmatrix} \begin{pmatrix} \dot{\delta} \\ \delta \end{pmatrix} + \begin{pmatrix} \omega^2 \\ 0 \end{pmatrix} \delta_{ref}$$

Dans un premier temps, on va considérer l'hypothèse selon laquelle la courbure de la route empruntée est nulle. Ainsi, si on ne considère pas le roulis et la courbure de la route, on peut modéliser le comportement dynamique du véhicule au moyen de l'équation suivante.

[Math.2]

$$\begin{pmatrix} \dot{\beta} \\ \dot{r} \\ \dot{\psi}_L \\ \dot{y}_L \end{pmatrix} = \begin{bmatrix} -\frac{C_f+C_r}{mv} & -1+\frac{C_r l_r - C_f l_f}{mv^2} & 0 & 0 \\ -\frac{C_f l_f - C_r l_r}{J} & -\frac{C_r l_r^2 + C_f l_f^2}{Jv} & 0 & 0 \\ 0 & 1 & 0 & 0 \\ v & l_s & v & 0 \end{bmatrix} \begin{pmatrix} \beta \\ r \\ \psi_L \\ y_L \end{pmatrix} + \begin{bmatrix} 0 \\ 0 \\ -v \\ 0 \end{bmatrix} \rho_{ref} + \begin{bmatrix} \frac{C_f}{mv} \\ \frac{C_f l_f}{J} \\ 0 \\ 0 \end{bmatrix} \delta$$

Cette modélisation du comportement du véhicule est appelée « modèle bicyclette » puisqu'elle ne tient pas compte du fait que chaque essieu du véhicule comporte non pas une, mais deux roues. Elle permet toutefois d'aboutir à une bonne modélisation de la trajectoire du véhicule en fonction de l'angle de braquage de ses roues directrices (ici les roues avant), lorsque le véhicule se trouve en ligne droite.

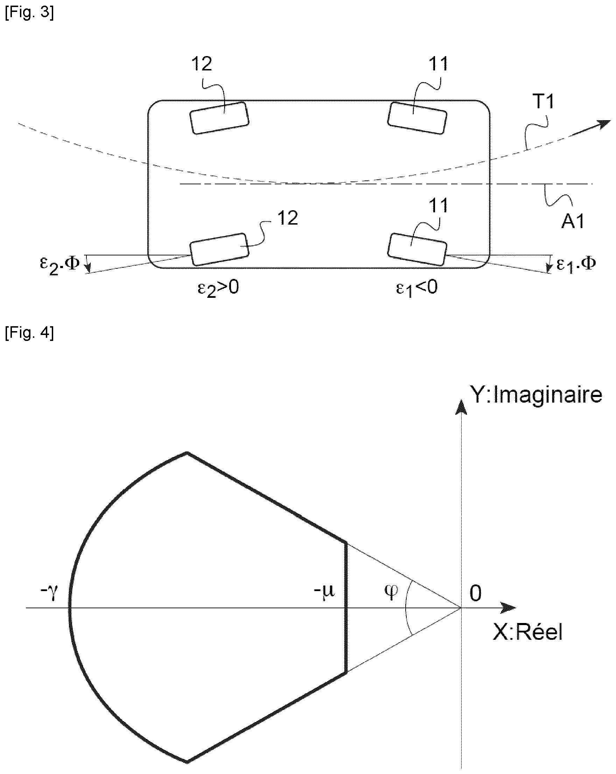

Toutefois, comme le montre la figure 3, le roulis pris par le véhicule automobile 10 en virage a une influence sur la trajectoire effective du véhicule, si bien qu'on souhaite le prendre en compte.

Ici, on pourra définir le roulis par un angle, ci-après appelé « angle de roulis Φ », mesurant l'angle d'inclinaison de la caisse du véhicule par la route autour de l'axe longitudinal A1 de ce véhicule.

Le coefficient de braquage induit par le roulis sur le train avant du véhicule sera noté $\varepsilon_1$. Une fois multiplié par l'angle de roulis Φ, il permettra d'évaluer en quoi ce roulis modifie l'angle de braquage des roues avant du véhicule et donc la trajectoire T1 représentée sur la figure 3.

Le coefficient de braquage induit par le roulis sur le train arrière sera noté $\varepsilon_2$. Une fois multiplié par l'angle de roulis Φ, il permettra d'évaluer en quoi ce roulis modifie l'angle de braquage des roues arrière.

Comme le montre la figure 3, le roulis a effectivement tendance à écarter le véhicule de sa trajectoire.

Pour tenir compte de ce phénomène, le modèle bicyclette présenté ci-avant est amélioré au moyen de l'équation suivante.

[Math.3]

$$\begin{pmatrix} \dot{\beta} \\ \dot{r} \\ \dot{\psi}_L \\ \dot{y}_L \end{pmatrix} = \begin{bmatrix} -\frac{C_f+C_r}{mv} & -1+\frac{C_r l_r - C_f l_f}{mv^2} & 0 & 0 \\ -\frac{C_f l_f - C_r l_r}{J} & -\frac{C_r l_r^2 + C_f l_f^2}{Jv} & 0 & 0 \\ 0 & 1 & 0 & 0 \\ v & l_s & v & 0 \end{bmatrix} \begin{pmatrix} \beta \\ r \\ \psi_L \\ y_L \end{pmatrix} + \begin{bmatrix} 0 \\ 0 \\ -v \\ 0 \end{bmatrix} \rho_{ref} + \begin{bmatrix} \frac{C_f}{mv} \\ \frac{C_f l_f}{J} \\ 0 \\ 0 \end{bmatrix}(\delta + \varepsilon_1 \phi) +$$

$$\begin{bmatrix} \frac{C_r}{mv} \\ -\frac{C_r l_r}{J} \\ 0 \\ 0 \end{bmatrix} \varepsilon_2 \phi$$

A ce stade, on pourra noter que l'angle de roulis Φ pourra être mesuré, ou estimé. Ici, il sera modélisé par l'équation suivante.

[Math.4]

$$I_x \ddot{\phi} + b_r \dot{\phi} + k_r \phi = ma_y h + mgh\phi$$

Il pourrait alors être estimé par un filtre de Kalman. Toutefois, ici, il est plus simplement estimé au bloc Z4 de la figure 5, à l'aide de l'équation suivante.

[Math.5]

$$\phi = \frac{ma_y h}{k_r - mgh}$$

Pour établir cette équation, on a considéré que la variation et l'accélération du roulis sont sensiblement nulles. En effet, la plupart de temps, le véhicule est plus au moins en virage établi, donc la dynamique du roulis (ses dérivés) est sensiblement nulle.

Ici, on cherche à assurer un bon suivi de trajectoire en minimisant l'erreur de suivi de trajectoire $e_{yL}$, dont on rappelle qu'elle s'exprime au moyen de l'équation suivante.

[Math.6]

$$e_{yL} = y_L - y_{L\_ref}$$

Dans ce mode de réalisation de l'invention, on suppose que la dynamique de la trajectoire de référence est représentée par l'équation ci-dessous :

[Math.7]

$$\ddot{y}_{L\_ref} = -\omega_f \dot{y}_{L\_ref} + \omega_f w$$

Le modèle bicyclette décrit jusqu'alors ne permet toutefois pas de limiter la vitesse de braquage des roues avant 11 du véhicule. Or de telles limitations s'avèrent particulièrement importantes pour assurer au conducteur du véhicule d'être en mesure de reprendre le contrôle du véhicule à tout moment.

La saturation de la vitesse de braquage illustré sur la figure 5 par le bloc Z5 peut être mise en équation de la façon suivante :

[Math.8]

$$\left|\dot{\delta}_{ref}\right| \leq \upsilon$$

Dans cette équation, le seuil $\upsilon$ est par exemple égale à 0,0491 Rad/s, ce qui correspond à 0,785 Rad/s au niveau du volant (c'est-à-dire 45°/s) si le coefficient de démultiplication de la direction est égal à 16.

Comme le montre la figure 6, le limiteur de vitesse de braquage ici utilisé est particulier en ce sens qu'il forme un pseudo-contrôleur en boucle fermée qui comporte :

- une fonction de transfert en chaîne directe égale au produit du seuil $\upsilon$ (pour respecter la condition édictée par l'équation précitée), d'un intégrateur en 1/s, et d'un correcteur qui est une fonction de type tangente hyperbolique de $\Delta.\alpha$,
- une fonction de transfert en chaîne indirecte (ou « chaîne de rétroaction ») égale à un.

Il reçoit en entrée la consigne non saturée d'angle de braquage $\delta_K$ et transmet en sortie la consigne saturée d'angle de braquage $\delta_{ref}$.

Sur cette figure, le coefficient $\Delta$ correspond à l'écart entre les variables $\delta_K$ et $\delta_{ref}$. Le coefficient $\alpha$ est une constante comprise entre 0 et l'infini, qui est le seul paramètre permettant de jouer sur le caractère rapide ou souple du limiteur de vitesse de braquage.

Ce limiteur de vitesse de braquage a ainsi pour avantage d'être simple à mettre au point puisqu'il suffit de régler le coefficient $\alpha$. Il permet d'assurer une commande continue et lisse (infiniment dérivable).

Alors, compte tenu de la forme de ce limiteur de vitesse de braquage, on peut écrire l'équation :

[Math.9]

$$\dot{\delta}_{ref} = v.\,tanh\left(\alpha\left(\delta_K - \delta_{ref}\right)\right)$$

On obtient ainsi un modèle de contrôlabilité du véhicule qui est pseudo-linéaire.

On peut effectivement introduire le paramètre $\theta$ suivant :

[Math.10]

$$\theta = \frac{\tanh(\alpha.(\delta_K - \delta_{ref}))}{\alpha.(\delta_K - \delta_{ref})}$$

Puis réécrire l'équation précitée sous la forme linéaire :

[Math.11]

$$\dot{\delta}_{ref} = -v.\,\alpha.\,\theta.\,\delta_{ref} + v.\,\alpha.\,\theta.\,\delta_K$$

Cette équation est caractéristique d'une représentation d'état et elle montre que le modèle de limiteur de variation de consigne est linéaire en fonction du paramètre θ.

Il est alors possible, sur cette base, de déterminer le contrôleur $K_{Fbck}$, dont on rappelle qu'il assure un bon suivi de la trajectoire d'évitement T0, mais qu'il ne tient pas compte du roulis pris par le véhicule.

Compte tenu des équations précitées, on peut enrichir encore le modèle bicyclette pour obtenir un nouveau modèle utilisable. Ce nouveau modèle enrichi s'écrit :

[Math.12]

$$
\begin{pmatrix} \dot{\beta} \\ \dot{r} \\ \dot{\psi}_L \\ \dot{e}_{y_L} \\ \ddot{\delta} \\ \dot{\delta} \\ \ddot{y}_{L_{ref}} \\ \dot{\delta}_{ref} \end{pmatrix}
=
$$

$$
\begin{bmatrix}
-\frac{C_f+C_r}{mV} & -1+\frac{C_r l_r - C_f l_f}{mV^2} & 0 & 0 & 0 & \frac{C_f}{mV} & 0 & 0 \\
-\frac{C_f l_f - C_r l_r}{J} & -\frac{C_r l_r^2 + C_f l_f^2}{JV} & 0 & 0 & 0 & \frac{C_f l_f}{J} & 0 & 0 \\
0 & 1 & 0 & 0 & 0 & 0 & 0 & 0 \\
V & l_s & V & 0 & 0 & 0 & -1 & 0 \\
0 & 0 & 0 & 0 & -2\xi\omega & -\omega^2 & 0 & \omega^2 \\
0 & 0 & 0 & 0 & 1 & 0 & 0 & 0 \\
0 & 0 & 0 & 0 & 0 & 0 & -\omega_f & 0 \\
0 & 0 & 0 & 0 & 0 & 0 & 0 & -v\alpha\boldsymbol{\theta}
\end{bmatrix}
\begin{pmatrix} \beta \\ r \\ \psi_L \\ e_{y_L} \\ \dot{\delta} \\ \delta \\ \dot{y}_{L_{ref}} \\ \delta_{ref} \end{pmatrix}
+
\begin{bmatrix} 0 \\ 0 \\ 0 \\ 0 \\ 0 \\ 0 \\ 0 \\ v\alpha\boldsymbol{\theta} \end{bmatrix}
\delta_K +
$$

$$
\begin{bmatrix} 0 \\ 0 \\ -V \\ 0 \\ 0 \\ 0 \\ 0 \\ 0 \end{bmatrix}
\rho_{ref} +
\begin{bmatrix} \frac{\varepsilon_1 C_f + \varepsilon_2 C_r}{mv} \\ \frac{\varepsilon_1 C_f l_f - \varepsilon_2 C_r l_r}{J} \\ 0 \\ 0 \\ 0 \\ 0 \\ 0 \\ 0 \end{bmatrix}
\phi +
\begin{bmatrix} 0 \\ 0 \\ 0 \\ 0 \\ 0 \\ 0 \\ \omega_f \\ 0 \end{bmatrix}
w_{y_{ref}}
$$

On rappelle que l'on peut écrire.

[Math.13]

$$\delta_K = \delta_{Fbck} + \delta_{Ffwd}$$

Par cette équation, on illustre bien que la consigne de braquage non saturée $\delta_K$ peut être obtenue à l'aide d'un premier contrôleur $K_{Fbck}$ et d'un terme de correction prenant en compte l'influence du roulis sur la trajectoire du véhicule.

Dans un premier temps, le contrôleur $K_{Fbck}$, qui est de type « feedback» (ou boucle fermée), permet de déterminer la première composante $\delta_{Fbck}$ de façon à garantir la stabilité et la robustesse de la boucle fermée. Dans un deuxième temps, le terme de correction (calculé en boucle ouverte ou « feed-forward ») permet de déterminer la seconde composante $\delta_{Ffwd}$ afin de compenser les effets de la courbure de route et du roulis (induit par la courbure de route) sur la performance nominale du contrôleur $K_{Fbck}$.

On peut alors s'intéresser tout d'abord à la synthèse du contrôleur $K_{Fbck}$.

On peut écrire :

[Math.14]

$$\delta_{Fbck} = \begin{bmatrix} k_\beta & k_r & k_{\psi_L} & k_{e_{y_L}} & k_{\dot{\delta}} & k_\delta & k_{\dot{y}_{L\_ref}} & k_{\delta_{ref}} \end{bmatrix} \begin{pmatrix} \beta \\ r \\ \psi_L \\ e_{y_L} \\ \dot{\delta} \\ \delta \\ \dot{y}_{L\_ref} \\ \delta_{ref} \end{pmatrix}$$

où $k_\beta$, $k_r$, $k_{\psi L}$, $k_{e_{y_L}}$, $k_{\dot{\delta}}$, $k_\delta$, $k_{\dot{y}_{L\_ref}}$ et $k_{\delta_{ref}}$ sont les « gains » du contrôleur $K_{Fbck}$. Ce contrôleur $K_{Fbck}$ est calculé avec l'hypothèse que la courbure et le roulis sont négligeables. Son objectif est de garantir la stabilité de la boucle fermée et de minimiser l'impact de la perturbation $w_{yref}$ sur le suivi de trajectoire d'évitement de référence. En effet, on sépare le contrôleur global en deux partie : d'une part, le « feedback » qui garantit la stabilité et le suivi de trajectoire de référence en cas nominal (sans effet de la courbure), et, d'autre part, le « feed-forward » compense l'effet de la courbure pour avoir l'iso performance (comme dans un cas de route sans courbure).

On peut alors considérer un vecteur d'état x, que l'on écrit sous la forme :

[Math.15]

$$x = \begin{pmatrix} \beta & r & \Psi_L & e_{y_L} & \dot{\delta} & \delta & \dot{y}_{L\_ref} & \delta_{ref} \end{pmatrix}^T$$

L'objectif est alors de déterminer la forme du contrôleur $K_{Fbck}$. Pour cela, on peut écrire notre modèle comportemental sous une forme générique :

[Math.16]

$$\begin{cases} \dot{x} = A(\theta)x + B_u(\theta).\delta_{ref} + B_w w \\ \qquad\qquad y = C_y.x \end{cases}$$

Dans cette équation, $C_y$ est la matrice identité, A est une matrice dynamique, $B_u$ est une matrice de commande et $B_w$ est une matrice de perturbation, que l'on peut écrire sous la forme :

[Math.17]

$$A = \begin{bmatrix} -\frac{C_f+C_r}{mV} & -1+\frac{C_rl_r-C_fl_f}{mV^2} & 0 & 0 & 0 & \frac{C_f}{mV} & 0 & 0 \\ -\frac{C_fl_f-C_rl_r}{J} & -\frac{C_rl_r^2+C_fl_f^2}{JV} & 0 & 0 & 0 & \frac{C_fl_f}{J} & 0 & 0 \\ 0 & 1 & 0 & 0 & 0 & 0 & 0 & 0 \\ V & l_s & V & 0 & 0 & 0 & -1 & 0 \\ 0 & 0 & 0 & 0 & -2\xi\omega & -\omega^2 & 0 & \omega^2 \\ 0 & 0 & 0 & 0 & 1 & 0 & 0 & 0 \\ 0 & 0 & 0 & 0 & 0 & 0 & -\omega_f & 0 \\ 0 & 0 & 0 & 0 & 0 & 0 & 0 & -v\alpha\theta \end{bmatrix}, B_u =$$

$$\begin{bmatrix} 0 \\ 0 \\ 0 \\ 0 \\ 0 \\ 0 \\ 0 \\ v\alpha\theta \end{bmatrix}, B_w = \begin{bmatrix} 0 \\ 0 \\ 0 \\ 0 \\ 0 \\ 0 \\ \omega_f \\ 0 \end{bmatrix}$$

Le contrôleur K$_{\text{Fbck}}$, qui est défini comme un retour d'état statique, peut quant à lui s'exprimer sous la forme :

[Math.18]

$$\delta_{Fbck} = \mathrm{K}_{Fbck}.x$$

Pour trouver un contrôleur K$_{\text{Fbck}}$ optimal, on peut utiliser différentes méthodes.
La méthode utilisée ici est celle des inégalités matricielles linéaires. Elle est ainsi réalisée à partir de critères d'optimisation convexe sous contraintes d'inégalités matricielles linéaires.
L'objectif est plus précisément d'optimiser les gains de la boucle fermée définie par le contrôleur K$_{\text{Fbck}}$ en jouant sur le choix des pôles.
Les inéquations matricielles utilisées sont au nombre de trois et sont définies par les inéquations suivantes.

[Math.19]

$$A_iQ + B_iR + (A_iQ + B_iR)^T + 2\mu Q \prec 0$$

[Math.20]

$$\begin{bmatrix} -\gamma Q & A_iQ + B_iR \\ * & -\gamma Q \end{bmatrix} \prec 0$$

[Math.21]

$$\left[\begin{matrix} sin(\varphi)(A_iQ + B_iR + (A_iQ + B_iR)^T) & cos(\varphi)(A_iQ + B_iR - (A_iQ + B_iR)^T) \\ * & sin(\varphi)(A_iQ + B_iR + (A_iQ + B_iR)^T) \end{matrix}\right] \prec 0$$

Dans ces inéquations, l'indice i est égal à 1 ou 2, et on peut alors définir les matrices $A_i$ et $B_i$ de la façon suivante :

[Math.22]

$$A1 = A(\theta_{min}), A2 = A(\theta_{max}), B_1 = B_u(\theta_{min}), B_2 = B_u(\theta_{max})$$

Une matrice de la forme $\begin{bmatrix} X & Y \\ Y^T & W \end{bmatrix}$ est écrite sous la forme $\begin{bmatrix} X & Y \\ * & W \end{bmatrix}$.

Le contrôleur $K_{Fbck}$ est défini par l'équation :

[Math.23]

$$K_{Fbck} = R.Q^{-1}$$

La vitesse du véhicule est supposée constante (donc toutes les matrices du système sont considérées constantes).

Les trois inéquations permettent de s'assurer que la dynamique de la boucle fermée reste limitée. En effet, grâce à ces contraintes, les pôles de la boucle fermée se retrouvent bornés dans une zone définie par un rayon $\gamma$, une distance minimale par rapport à l'axe imaginaire $\mu$, et un angle d'ouverture $\varphi$ (voir figure 4).

Cette méthode s'avère efficace lorsqu'il s'agit de déterminer à chaque instant l'angle de volant de façon raisonnable (et maîtrisable par un conducteur aux compétences moyennes) et de manière réalisable par l'actionneur. Ces contraintes assurent également la stabilité de la boucle fermée.

L'objectif est ici de minimiser le rayon $\gamma$. Une fois les gains du contrôleur $K_{Fbck}$ obtenus, on peut obtenir calculer le résultat du contrôleur au moyen de la formule suivante :

[Math.24]

$$\delta_{Fbck} = \begin{bmatrix} k_\beta & k_r & k_{\psi_L} & k_{e_{y_L}} & k_{\dot{\delta}} & k_\delta & k_{\dot{y}_{L\_ref}} & k_{\delta_{sat}} \end{bmatrix} \begin{pmatrix} \beta \\ r \\ \psi_L \\ e_{y_L} \\ \dot{\delta} \\ \delta \\ \dot{y}_{L\_ref} \\ \delta_{ref} \end{pmatrix}$$

On a introduit dans les trois inéquations matricielles les valeurs $\theta_{min}$ et $\theta_{max}$.

La valeur de $\theta$, qui est lié à l'écart entre $\delta_K$ et $\delta_{ref}$, reflète le niveau de violation par le contrôleur $K_{Fbck}$ de la limite de contrôlabilité énoncée par l'équation [Math.8].

Par définition, $\theta$ est compris entre 0 (exclu) et 1 (inclus). Lorsque $\theta$ est égal à 1, la consigne non saturée d'angle au volant $\delta_K$ calculée respecte bien la limite de contrôlabilité. Lorsqu'il est proche de 0, la consigne non saturée d'angle au volant $\delta_K$ calculée présente une valeur qui impose une trop grande dynamique de braquage, ce qui génère un risque d'instabilité du véhicule. Quand $\theta$ prend des valeurs intermédiaires entre 0 et 1, la limite de contrôlabilité n'est pas respectée mais il est possible qu'il n'y ait pas de risque d'instabilité du véhicule.

En d'autres termes, le choix des valeurs $\theta_{min}$ et $\theta_{max}$ a un impact direct sur la performance et sur la robustesse du contrôleur $K_{Fbck}$. Plus la plage $[\theta_{min}, \theta_{max}]$ est grande, moins le contrôleur $K_{Fbck}$ est performant mais plus il est robuste. Au contraire, plus cette plage est petite, plus le contrôleur $K_{Fbck}$ est performant mais moins il est robuste.

Logiquement la valeur $\theta_{max}$ est choisie égale à 1 (cas selon lequel le contrôleur $K_{Fbck}$ fonctionne en mode linéaire, comme c'est d'ailleurs généralement le cas, sans violation de contrainte de contrôlabilité).

La détermination de la valeur $\theta_{min}$ nécessite en revanche de faire un compromis entre performance et robustesse. La détermination de cette valeur revient à imposer un seuil maximal pour l'écart, en valeur absolue, entre $\delta_K$ et $\delta_{ref}$.

En virage, le double effet de courbure et de roulis devient plus impactant sur la performance du contrôleur $K_{Fbck}$.

L'invention propose alors de calculer la seconde composante $\delta_{Ffwd}$ pour compenser l'effet de la courbure et celle du roulis afin de maintenir un bon niveau de suivi de la trajectoire d'évitement T0.

Cette seconde composante $\delta_{Ffwd}$ peut être calculée lors de chaque phase d'évitement ou uniquement pour celles intervenant sur des routes courbées (lorsque le rayon de courbure de la route est inférieur à un seuil prédéterminé), la courbure de la route étant par exemple issue des données perçues par une caméra.

Comme cela apparait bien sur la figure 5, pour obtenir cette seconde composante $\delta_{Ffwd}$, on utilise les gains du contrôleur $K_{Fbck}$.

En pratique, on remplace, dans l'équation [Math.12], la consigne non saturée d'angle de braquage $\delta_K$ par son expression issue de l'équation [Math.13], ce qui permet d'obtenir l'équation d'un système en boucle fermée suivant.

[Math.25]

$$
\begin{pmatrix} \dot{\beta} \\ \dot{r} \\ \dot{\psi}_L \\ \dot{e}_{y_L} \\ \ddot{\delta} \\ \dot{\delta} \\ \ddot{y}_{L_{ref}} \\ \dot{\delta}_{ref} \end{pmatrix} =
$$

$$
\begin{bmatrix}
-\frac{C_f+C_r}{mV} & -1+\frac{C_r l_r - C_f l_f}{mV^2} & 0 & 0 & 0 & \frac{C_f}{mV} & 0 & 0 \\
-\frac{C_f l_f - C_r l_r}{J} & -\frac{C_r l_r^2 + C_f l_f^2}{JV} & 0 & 0 & 0 & \frac{C_f l_f}{J} & 0 & 0 \\
0 & 1 & 0 & 0 & 0 & 0 & 0 & 0 \\
V & l_s & V & 0 & 0 & 0 & -1 & 0 \\
0 & 0 & 0 & 0 & -2\xi\omega & -\omega^2 & 0 & \omega^2 \\
0 & 0 & 0 & 0 & 1 & 0 & 0 & 0 \\
0 & 0 & 0 & 0 & 0 & 0 & -\omega_f & 0 \\
k_\beta v\alpha\boldsymbol{\theta} & k_r v\alpha\boldsymbol{\theta} & k_{\psi_L} v\alpha\boldsymbol{\theta} & k_{e_{y_L}} v\alpha\boldsymbol{\theta} & k_{\dot{\delta}} v\alpha\boldsymbol{\theta} & k_\delta v\alpha\boldsymbol{\theta} & k_{\dot{y}_{L_{ref}}} v\alpha\boldsymbol{\theta} & -v\alpha\boldsymbol{\theta}\left(1-k_{\delta_{sat}}\right)
\end{bmatrix}
\begin{pmatrix} \beta \\ r \\ \psi_L \\ e_{y_L} \\ \dot{\delta} \\ \delta \\ \dot{y}_{L_{ref}} \\ \delta_{ref} \end{pmatrix} +
$$

$$
\begin{bmatrix} 0 \\ 0 \\ 0 \\ 0 \\ 0 \\ 0 \\ 0 \\ v\alpha\boldsymbol{\theta} \end{bmatrix} \delta_{Ffwd} +
\begin{bmatrix} 0 \\ 0 \\ -V \\ 0 \\ 0 \\ 0 \\ 0 \\ 0 \end{bmatrix} \rho_{ref} +
\begin{bmatrix} \frac{\varepsilon_1 C_f + \varepsilon_2 C_r}{mv} \\ \frac{\varepsilon_1 C_f l_f - \varepsilon_2 C_r l_r}{J} \\ 0 \\ 0 \\ 0 \\ 0 \\ 0 \\ 0 \end{bmatrix} \phi +
\begin{bmatrix} 0 \\ 0 \\ 0 \\ 0 \\ 0 \\ 0 \\ \omega_f \\ 0 \end{bmatrix} w_{y_{ref}}
$$

Sachant que la perturbation $w_{yref}$ a déjà été compensée lors du calcul de la composante $\delta_{Fbck}$, il sera alors seulement nécessaire dans le calcul de la seconde composante $\delta_{Ffwd}$ de minimiser l'influence des autres perturbations (la courbure et le roulis) sur l'erreur statique de suivi de trajectoire d'évitement $e_{yL}$.

Pour cela, tout d'abord, on peut calculer les valeurs statiques des états du système défini par l'équation [Math.25], où les dérivés sont nulles, ce qui revient à résoudre le système d'équation suivant :

[Math.26]

$$
\begin{bmatrix}
-\frac{C_f+C_r}{mV} & -1+\frac{C_r l_r - C_f l_f}{mV^2} & 0 & 0 & 0 & \frac{C_f}{mV} & 0 & 0 \\
-\frac{C_f l_f - C_r l_r}{J} & -\frac{C_r l_r^2 + C_f l_f^2}{JV} & 0 & 0 & 0 & \frac{C_f l_f}{J} & 0 & 0 \\
0 & 1 & 0 & 0 & 0 & 0 & 0 & 0 \\
V & l_s & V & 0 & 0 & 0 & -1 & 0 \\
0 & 0 & 0 & 0 & -2\xi\omega & -\omega^2 & 0 & \omega^2 \\
0 & 0 & 0 & 0 & 1 & 0 & 0 & 0 \\
0 & 0 & 0 & 0 & 0 & 0 & -\omega_f & 0 \\
k_\beta v\alpha\theta & k_r v\alpha\theta & k_{\psi_L} v\alpha\theta & k_{e_{y_L}} v\alpha\theta & k_{\dot\delta} v\alpha\theta & k_\delta v\alpha\theta & k_{\dot y_{L\_ref}} v\alpha\theta & -v\alpha\theta(1-k_{\delta_{sat}})
\end{bmatrix}
\begin{pmatrix}
\beta^{static} \\
r^{static} \\
\psi_L^{static} \\
e_{y_L}^{static} \\
\dot\delta^{static} \\
\delta^{static} \\
\dot y_{L\_ref}^{static} \\
\delta_{ref}^{static}
\end{pmatrix}
+
$$

$$
\begin{bmatrix} 0 \\ 0 \\ 0 \\ 0 \\ 0 \\ 0 \\ 0 \\ v\alpha\theta \end{bmatrix}\delta_{Ffwd}
+
\begin{bmatrix} 0 \\ 0 \\ -V \\ 0 \\ 0 \\ 0 \\ 0 \\ 0 \end{bmatrix}\rho_{ref}
+
\begin{bmatrix} \frac{\varepsilon_1 C_f + \varepsilon_2 C_r}{mv} \\ \frac{\varepsilon_1 C_f l_f - \varepsilon_2 C_r l_r}{J} \\ 0 \\ 0 \\ 0 \\ 0 \\ 0 \\ 0 \end{bmatrix}\phi = 0
$$

La résolution de ce système d'équation ci-dessus permet de calculer l'erreur de suivi de trajectoire $e_{yL}$ statique, en fonction de la courbure $\rho_{ref}$ de la route, de la vitesse V du véhicule automobile 10, de l'angle de roulis Φ, des gains du contrôleur $K_{Fbck}$, de la seconde composante $\delta_{Ffwd}$ recherchée, et d'autres paramètres relatifs au véhicule lui-même (lf, lr, ε1, ε2...). On peut ainsi écrire :

[Math.27]

$$
e_{y_L}^{static} = f\left(\delta_{Ffwd}, \phi, V, \rho_{ref}\right)
$$

Alors, pour trouver la seconde composante $\delta_{Ffwd}$ permettant d'obtenir une erreur de suivi de trajectoire $e_{yL}$ statique nulle, on peut écrire l'équation ci-dessous :

[Math.28]

$$
e_{y_L}^{static} = 0
$$

Ce qui permet d'obtenir l'équation qui suit.

[Math.29]

$$
\delta_{Ffwd} = \left[(l_f + l_r)\left(1 - k_\delta - k_{\delta_{ref}}\right) + \left(k_{\psi_L} - k_\beta\right)l_r + k_{\psi_L}l_s - k_r V + K_V V^2\right].\rho_{ref} -
$$

$$
\left[\left(1 - k_\delta - k_{\delta_{ref}}\right)\varepsilon_1 - \left(1 - k_\delta - k_{\delta_{ref}} + k_{\psi_L} - k_\beta\right)\varepsilon_2\right].\phi
$$

Dans cette équation, le terme $K_v$ est appelé « gradient de sous-virage » et s'exprime ainsi :

[Math.30]

$$K_V = \left( \frac{l_r\left(1 - k_\delta - k_{\delta_{ref}}\right)}{C_f} - \frac{l_f\left(1 - k_\delta - k_{\delta_{ref}} + k_{\psi_L} - k_\beta\right)}{C_r} \right) \cdot \frac{m}{l_f + l_r}$$

Ce gradient de sous-virage est un coefficient qui permet d'exprimer et de quantifier la tendance du véhicule automobile à sous-virer dans un virage à une vitesse donnée.

En résumé, pour obtenir la seconde composante $\delta_{Ffwd}$, il suffit donc de calculer le terme Kv au moyen de l'équation [Math.30] (bloc Z2 de la figure 5), puis d'utiliser l'équation [Math.29] (bloc Z3).

A ce stade, on peut alors décrire le procédé qui sera exécuté par le calculateur 13 du véhicule automobile 10 pour mettre en œuvre l'invention.

Le calculateur 13 est ici programmé pour mettre en œuvre ce procédé de façon récursive, c'est-à-dire pas à pas, et en boucle.

Pour cela, au cours d'une première étape, le calculateur 13 vérifie que la fonction d'évitement autonome d'obstacle (AES) est activée.

Si tel est le cas, il tente de détecter la présence d'un éventuel obstacle se trouvant sur le trajet du véhicule automobile 10. Il utilise pour cela son télédétecteur RADAR ou LIDAR.

En l'absence d'obstacle, cette étape est répétée en boucles.

Dès qu'un obstacle 20 potentiellement dangereux est détecté (voir figure 2), le calculateur 13 planifie une trajectoire d'évitement T0 permettant d'éviter cet obstacle 20.

Le calculateur 13 va alors chercher à définir une consigne de pilotage de l'actionneur de direction assistée 31, à savoir la consigne saturée d'angle de braquage $\delta_{ref}$, permettant de suivre au mieux cette trajectoire d'évitement T0.

Il commence pour cela par calculer ou acquérir des paramètres tels que :

- l'angle de braquage $\delta$ mesuré,
- l'angle de dérive $\beta$ du véhicule automobile 10,
- la dérivée par rapport au temps de l'angle de braquage mesuré $\delta$,
- la consigne saturée d'angle de braquage $\delta_{ref}$ obtenue au pas de temps précédent,
- la vitesse de lacet r,
- l'angle relatif de cap $\Psi_L$, et
- la consigne d'écart latéral $y_{L\text{-}ref}$.

Comme le montre la figure 5, le calculateur 13 calcule ensuite les gains du contrôleur $K_{Fbck}$, puis il en déduit la valeur de la première composante $\delta_{Fbck}$ de la consigne d'angle de braquage non saturée $\delta_K$.

Il en déduit également les valeurs du terme $K_v$ puis de la seconde composante $\delta_{Ffwd}$ de la consigne d'angle de braquage non saturée $\delta_K$.

Il peut donc ensuite en déduire la valeur de cette consigne d'angle de braquage non saturée $\delta_K$ puis de celle de consigne d'angle de braquage saturée $\delta_{ref}$.

Cette dernière est ensuite transmise à l'actionneur de direction assistée 31 afin de dévier le véhicule de sa trajectoire initiale.

La présente invention n'est nullement limitée au mode de réalisation décrit et représenté, mais l'homme du métier saura y apporter toute variante conforme à l'invention.

**Revendications**

1.  Procédé de pilotage automatisé d'un véhicule automobile (10)

    comportant des roues (11, 12) parmi lesquelles au moins deux roues (11) sont directrices, comportant des étapes de :

    - acquisition de paramètres ($\beta$, r, $\Psi_L$, $y_L$, $\delta$, $\delta_{ref}$) relatifs à une trajectoire d'évitement d'un obstacle (20) par le véhicule automobile (10), et de
    - calcul par un calculateur (13) d'une consigne provisoire de pilotage ($\delta_{Fbck}$) d'un actionneur (31) de braquage des roues (11) directrices, en fonction desdits paramètres ($\beta$, r, $\Psi_L$, $y_L$, $\delta$, $\delta_{ref}$) et au moyen d'un contrôleur en boucle fermée ($K_{Fbck}$),

**EP 4 284 690 B1**

**caractérisé en ce qu'**il comporte en outre des étapes de :

- acquisition d'une accélération latérale ($a_y$) ou d'un angle de roulis ($\Phi$) subi par le véhicule automobile (10), et
- calcul en boucle ouverte d'un terme de correction ($\delta_{Ffwd}$) de ladite consigne provisoire de pilotage ($\delta_{Fbck}$), en fonction de l'accélération latérale ($a_y$) ou de l'angle de roulis ($\Phi$) acquis.

2. Procédé de pilotage selon la revendication précédente, dans lequel le terme de correction ($\delta_{Ffwd}$) est calculé en fonction d'un coefficient de braquage ($\varepsilon_1$) induit par le roulis du véhicule automobile (10) sur les roues avant (11) du véhicule automobile (10) et/ou d'un coefficient de braquage ($\varepsilon_2$) induit par le roulis du véhicule automobile (10) sur les roues arrière (12) du véhicule automobile (10).

3. Procédé de pilotage selon l'une des revendications précédentes, dans lequel le terme de correction ($\delta_{Ffwd}$) est calculé en fonction de la courbure ($\rho_{ref}$) de la route empruntée par le véhicule automobile (10).

4. Procédé de pilotage selon la revendication précédente, dans lequel le terme de correction ($\delta_{Ffwd}$) est égal à la somme du :

- produit d'une première variable multipliée par l'accélération latérale ($a_y$) ou par l'angle de roulis ($\Phi$), et
- produit d'une seconde variable multipliée par la courbure ($\rho_{ref}$) de la route.

5. Procédé de pilotage selon l'une des revendications précédentes, dans lequel le terme de correction ($\delta_{Ffwd}$) est calculé en fonction d'au moins l'un des gains du contrôleur en boucle fermée ($K_{Fbck}$).

6. Procédé de pilotage selon l'une des revendications précédentes, dans lequel le terme de correction ($\delta_{Ffwd}$) est calculé en fonction d'un gradient de sous-virage ($K_v$).

7. Procédé de pilotage selon la revendication précédente, dans lequel le gradient de sous-virage ($K_v$) est calculé en fonction d'au moins l'un des gains du contrôleur en boucle fermée ($K_{Fbck}$).

8. Procédé de pilotage selon la revendication précédente, dans lequel le

gradient de sous-virage (Kv) est calculé au moyen de l'équation suivante :

$$K_V = \left( \frac{l_r\left(1 - k_\delta - k_{\delta_{ref}}\right)}{C_f} - \frac{l_f\left(1 - k_\delta - k_{\delta_{ref}} + k_{\psi_L} - k_\beta\right)}{C_r} \right) \cdot \frac{m}{l_f + l_r},$$

où m, $C_f$, $C_f$, $l_f$, $l_r$ sont des paramètres liés uniquement à l'architecture du véhicule automobile, et où $k_\delta$, $k_{\delta ref}$, $k_{\psi L}$ et $k_\beta$ sont des gains du contrôleur en boucle fermée.

9. Procédé de pilotage selon les revendications précédentes, dans lequel

le terme de correction ($\delta_{Ffwd}$) est calculé au moyen de l'équation suivante :

$$\delta_{Ffwd} = \left[ \left(l_f + l_r\right)\left(1 - k_\delta - k_{\delta_{ref}}\right) + \left(k_{\psi_L} - k_\beta\right)l_r + k_{\psi_L}l_s - k_r V + K_V V^2 \right] \cdot \rho_{ref} -$$

$$\left[ \left(1 - k_\delta - k_{\delta_{ref}}\right)\varepsilon_1 - \left(1 - k_\delta - k_{\delta_{ref}} + k_{\psi_L} - K_\beta\right)\varepsilon_2 \right] \cdot \phi$$

où :
$l_f$, $l_r$ sont des paramètres liés uniquement à l'architecture du véhicule automobile,
V est la vitesse longitudinale du véhicule automobile,
$l_s$ est une distance de visée prédéterminée,
$\rho_{ref}$ est le rayon de courbure de la route au niveau du véhicule automobile,
$\varepsilon_1$ est le coefficient de braquage induit par le roulis sur le train de roues avant,
$\varepsilon_2$ est le coefficient de braquage induit par le roulis sur le train de roues arrière,
$\Phi$ est l'angle de roulis,

**16**

Kv est le gradient de sous-virage,

$k_\delta$, $k_{\delta ref}$, $k_{\Psi L}$, $k_r$, et $k_\beta$ sont des gains du contrôleur en boucle fermée.

10. Véhicule automobile (10) comprenant un actionneur (31) de braquage des roues (11) directrices, et un calculateur (13) pour piloter ledit actionneurs (31), **caractérisé en ce que** le calculateur (13) est programmé pour mettre en œuvre un procédé selon l'une des revendications précédentes.


**Patentansprüche**

1. Verfahren zur automatisierten Steuerung eines Kraftfahrzeugs (10) mit Rädern (11, 12), von denen wenigstens zwei Räder (11) Antriebsräder sind, das folgende Schritte beinhaltet:

   - Erfassen von Parametern ($\beta$, r, $\Psi_L$, $y_L$, $\delta$, $\delta_{ref}$) in Bezug auf eine Bahn zum Ausweichen eines Hindernisses (20) durch das Kraftfahrzeug (10), und
   - Berechnen, durch einen Rechner (13), einer provisorischen Vorgabe zur Steuerung ($\delta_{Fbck}$) eines Betätigungselements (31) zum Lenken der Antriebsräder (11) in Abhängigkeit von den Parametern ($\beta$, r, $\Psi_L$, $y_L$, $\delta$, $\delta_{ref}$) und mittels eines Reglers im geschlossenen Regelkreis ($K_{Fbck}$),
   **dadurch gekennzeichnet, dass** es ferner folgende Schritte beinhaltet:

   - Erfassen einer Querbeschleunigung ($a_y$) oder eines Rollwinkels ($\Phi$), die bzw. den das Kraftfahrzeug (10) erfährt, und
   - Berechnen, im offenen Regelkreis, eines Korrekturterms ($\delta_{Ffwd}$) der provisorischen Steuerungsvorgabe ($\delta_{Fbck}$) in Abhängigkeit von der erfassten Querbeschleunigung ($a_y$) oder dem erfassten Rollwinkel ($\Phi$).

2. Steuerungsverfahren nach dem vorhergehenden Anspruch, wobei der Korrekturterm ($\delta_{Ffwd}$) in Abhängigkeit von einem Lenkkoeffizienten ($\varepsilon_1$), der durch das Rollen des Kraftfahrzeugs (10) an den Vorderrädern (11) des Kraftfahrzeugs (10) induziert wird, und/oder von einem Lenkkoeffizienten ($\varepsilon_2$), der durch das Rollen des Kraftfahrzeugs (10) an den Hinterrädern (12) des Kraftfahrzeugs (10) induziert wird, berechnet wird.

3. Steuerungsverfahren nach einem der vorhergehenden Ansprüche, wobei der Korrekturterm ($\delta_{Ffwd}$) in Abhängigkeit von der Krümmung ($\rho_{ref}$) der Straße berechnet wird, auf der das Kraftfahrzeug (10) fährt.

4. Steuerungsverfahren nach dem vorhergehenden Anspruch, wobei der Korrekturterm ($\delta_{Ffwd}$) gleich der Summe von Folgendem ist:

   - dem Produkt einer ersten Variablen, die mit der Querbeschleunigung ($a_y$) oder dem Rollwinkel ($\Phi$) multipliziert wird, und
   - dem Produkt einer zweiten Variablen, die mit der Krümmung ($\rho_{ref}$) der Straße multipliziert wird.

5. Steuerungsverfahren nach einem der vorhergehenden Ansprüche, wobei der Korrekturterm ($\delta_{Ffwd}$) in Abhängigkeit von wenigstens einem der Gains des Reglers im geschlossenen Regelkreis ($K_{Fbck}$) berechnet wird.

6. Steuerungsverfahren nach einem der vorhergehenden Ansprüche, wobei der Korrekturterm ($\delta_{Ffwd}$) in Abhängigkeit von einem Untersteuerungsgradienten ($K_v$) berechnet wird.

7. Steuerungsverfahren nach dem vorhergehenden Anspruch, wobei der Untersteuerungsgradient ($K_v$) in Abhängigkeit von wenigstens einem der Gains des Reglers im geschlossenen Regelkreis ($K_{Fbck}$) berechnet wird.

8. Steuerungsverfahren nach dem vorhergehenden Anspruch, wobei der Untersteuerungsgradient ($K_v$) mittels der folgenden Gleichung berechnet wird:

$$K_V = \left( \frac{l_r \left(1 - k_\delta - k_{\delta_{ref}}\right)}{C_f} - \frac{l_f \left(1 - k_\delta - k_{\delta_{ref}} + k_{\psi_L} - k_\beta\right)}{C_r} \right) \cdot \frac{m}{l_f + l_r}$$

wobei m, $C_f$, $C_r$, $l_e$, $l_r$ Parameter sind, die nur mit der Architektur des Kraftfahrzeugs in Verbindung stehen, und wobei

$k_\delta$, $k_{\delta ref}$, $k_{\Psi L}$ und $k_\beta$ Gains des Reglers im geschlossenen Regelkreis sind.

9. Steuerungsverfahren nach den vorhergehenden Ansprüchen, wobei der Korrekturterm ($\delta_{Ffwd}$) mittels der folgenden Gleichung berechnet wird:

$$\delta_{Ffwd} = \left[(l_f + l_r)\left(1 - k_\delta - k_{\delta_{ref}}\right) + \left(k_{\psi_L} - k_\beta\right)l_r + k_{\psi_L}l_s - k_r V + K_v V^2\right]$$
$$\cdot \rho_{ref} - \left[\left(1 - k_\delta - k_{\delta_{ref}}\right)\varepsilon_1 - \left(1 - k_\delta - k_{\delta_{ref}} + k_{\psi_L} - K_\beta\right)\varepsilon_2\right]$$
$$\cdot \phi$$

wobei:

$l_f$, $l_r$ Parameter sind, die nur mit der Architektur des Kraftfahrzeugs in Verbindung stehen,
V die Längsgeschwindigkeit des Kraftfahrzeugs ist,
$l_s$ eine vorbestimmte Visierentfernung ist,
$\rho_{ref}$ der Krümmungsradius der Straße im Bereich des Kraftfahrzeugs ist,
$\varepsilon_1$ der Lenkkoeffizient ist, der durch das Rollen am vorderen Radsatz induziert wird,
$\varepsilon_2$ der Lenkkoeffizient ist, der durch das Rollen am hinteren Radsatz induziert wird,
$\Phi$ der Rollwinkel ist,
$K_v$ der Untersteuerungsgradient ist,
$k_\delta$, $k_{\delta ref}$, $k_{\Psi L}$, $k_r$, und $k_\beta$ Gains des Reglers im geschlossenen Regelkreis sind.

10. Kraftfahrzeug (10) umfassend ein Betätigungselement (31) zum Lenken der Antriebsräder (11) und einen Rechner (13) zur Steuerung der Betätigungselemente (31), **dadurch gekennzeichnet, dass** der Rechner (13) dafür programmiert ist, ein Verfahren nach einem der vorhergehenden Ansprüche durchzuführen.

## Claims

1. Control method for the automated steering of a motor vehicle (10) comprising wheels (11, 12) of which at least two wheels (11) are steered wheels, comprising steps of:

   - acquiring parameters ($\beta$, r, $\Psi_L$, $y_L$, $\delta$, $\delta_{ref}$) relating to an avoidance path whereby the motor vehicle (10) avoids an obstacle (20), and of
   - calculating, using a computer (13) a temporary control instruction ($\delta_{Fbck}$) for a steering actuator (31) that steers the steered wheels (11), as a function of said parameters ($\beta$, r, $\Psi_L$, $y_L$, $\delta$, $\delta_{ref}$) and by means of a closed loop controller ($K_{Fbck}$),
   **characterized in that** it further comprises steps of:

   - acquiring a lateral acceleration ($a_y$) or a roll angle ($\Phi$) experienced by the motor vehicle (10), and
   - calculating, using open loop calculation, a correction term ($\delta_{Ffwd}$) for said temporary control instruction ($\delta_{Fbck}$), as a function of the lateral acceleration ($a_y$) or of the roll angle ($\Phi$) acquired.

2. Control method according to the preceding claim, wherein the correction term ($\delta_{Ffwd}$) is calculated as a function of a coefficient of steering ($\varepsilon_1$) induced by the rolling of the motor vehicle (10) on the front wheels (11) of the motor vehicle (10) and/or of a coefficient of steering ($\varepsilon_2$) induced by the rolling of the motor vehicle (10) on the rear wheels (12) of the motor vehicle (10).

3. Control method according to one of the preceding claims, wherein the correction term ($\delta_{Ffwd}$) is calculated as a function of the curvature ($\rho_{ref}$) of the road taken by the motor vehicle (10).

4. Control method according to the preceding claim, wherein the correction term ($\delta_{Ffwd}$) is equal to the sum of:

   - the product of a first variable multiplied by the lateral acceleration ($a_y$) or by the roll angle ($\Phi$), and
   - the product of a second variable multiplied by the curvature ($\rho_{ref}$) of the road.

5. Control method according to one of the preceding claims, wherein the correction term ($\delta_{Ffwd}$) is calculated as a function of at least one of the gains of the closed loop controller ($K_{Fbck}$).

6. Control method according to one of the preceding claims, wherein the correction term ($\delta_{Ffwd}$) is calculated as a function of an understeer gradient ($K_v$).

7. Control method according to the preceding claim, wherein the understeer gradient ($K_v$) is calculated as a function of at least one of the gains of the closed loop controller ($K_{Fbck}$).

8. Control method according to the preceding claim, wherein the understeer gradient ($K_v$) is calculated by means of the following equation:

$$K_V = \left( \frac{l_r\left(1-k_\delta-k_{\delta_{ref}}\right)}{C_f} - \frac{l_f\left(1-k_\delta-k_{\delta_{ref}}+k_{\psi_L}-k_\beta\right)}{C_r} \right) \cdot \frac{m}{l_f+l_r},$$

where m, $C_f$, $C_r$, $l_f$, $l_r$ are parameters connected only with the architecture of the motor vehicle, and where $k_\delta$, $k_{\delta ref}$, $k_{\psi L}$ and $k_\beta$ are gains of the closed loop controller.

9. Control method according to the preceding claims, wherein the correction term ($\delta_{Ffwd}$) is calculated by means of the following equation:

$$\delta_{Ffwd} = \left[\left(l_f + l_r\right)\left(1 - k_\delta - k_{\delta_{ref}}\right) + \left(k_{\psi_L} - k_\beta\right)l_r + k_{\psi_L}l_s - k_rV + K_VV^2\right] \cdot \rho_{ref} -$$
$$\left[\left(1 - k_\delta - k_{\delta_{ref}}\right)\varepsilon_1 - \left(1 - k_\delta - k_{\delta_{ref}} + k_{\psi_L} - K_\beta\right)\varepsilon_2\right] \cdot \phi$$

where:

$l_f$, $l_r$ are parameters connected only with the architecture of the motor vehicle,
V is the longitudinal velocity of the motor vehicle,
$l_s$ is a predetermined sighting distance,
$\rho_{ref}$ is the radius of curvature of the road at the motor vehicle,
$\varepsilon_1$ is the coefficient of steering induced by the rolling on the front wheelset,
$\varepsilon_2$ is the coefficient of steering induced by the rolling on the rear wheelset,
$\Phi$ is the roll angle,
Kv is the understeer gradient,
$k_\delta$, $k_{\delta ref}$, $k_{\psi L}$, $k_r$, and $k_\beta$ are gains of the closed loop controller.

10. Motor vehicle (10) comprising a steering actuator (31) for steering the steered wheels (11) and a computer (13) for controlling said actuators (31), **characterized in that** the computer (13) is programmed to implement a method according to one of the preceding claims.

[Fig. 1]

[Fig. 2]

[Fig. 3]

[Fig. 4]

[Fig. 5]

[Fig. 6]

**EP 4 284 690 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 9731755 B
- DE 102009043070 A1
- FR 3088275 A1